Europäisches Patentamt

European Patent Office

Office européen des brevets

(11) Veröffentlichungsnummer : **0 143 815**
**B1**

(12) **EUROPÄISCHE PATENTSCHRIFT**

(45) Veröffentlichungstag der Patentschrift :
25.03.87

(51) Int. Cl.⁴ : **B 60 J   5/06**

(21) Anmeldenummer : 84901970.8

(22) Anmeldetag : 12.05.84

(86) Internationale Anmeldenummer :
PCT/DE 84/00107

(87) Internationale Veröffentlichungsnummer :
WO/8404500 (22.11.84 Gazette 84/27)

(54) AUSSCHWENKBARE SCHIEBETÜR FÜR FAHRZEUGE, INSBESONDERE FÜR KRAFTFAHRZEUGE.

(30) Priorität : 18.05.83 DE 3318007

(43) Veröffentlichungstag der Anmeldung :
12.06.85 Patentblatt 85/24

(45) Bekanntmachung des Hinweises auf die Patenterteilung : 25.03.87 Patentblatt 87/13

(84) Benannte Vertragsstaaten :
FR GB

(56) Entgegenhaltungen :
EP-A- 0 102 053
DE-A- 2 011 381
DE-A- 2 134 653
FR-A-   990 126
FR-A- 1 577 398
GB-A- 1 114 981

(73) Patentinhaber : Gebrüder Bode & Co. GmbH
Ochshäuser Strasse 45
D-3500 Kassel (DE)

(72) Erfinder : BRITZKE, Ingo
Stellbergweg 8
D-3500 Kassel (DE)
Erfinder : KRAMER, Hans
Marktstr. 12
D-3507 Baunatal 1 (DE)

(74) Vertreter : Walther, Horst, Dipl.-Ing.
Wilhelmshöher Allee 275 Postfach 41 01 08
D-3500 Kassel (DE)

**Beschreibung**

Die Erfindung betrifft eine ausschwenkbare Schiebetür für Fahrzeuge, insbesondere für Kraftfahrzeuge, bei der oben am Türflügel Führungsmittel vorgesehen sind, die in oberhalb des Türflügels angeordneten Führungsschienen laufen, wobei das oben vorgesehene Führungsmittel ein am Türflügel gelenkig angebrachter Schwenkarm ist, dessen Ende bogenförmig abgekrümmt ist.

Es ist eine ausschwenkbare Schiebetür für Fahrzeuge gemäß dem Oberbegriff des Anspruchs 1 bekannt (DE-C-21 34 653), bei der die Fahrzeugtür mittels eines in einer Führungsschiene geführten im wesentlichen geraden Führungsarmes gehalten ist, an dem endseitig der Türflügel gelenkig angeordnet ist.

Weiterhin ist gemäß der europäischen, am 7.3.84 veröffentlichten Patentanmeldung EP-A-10-2 053 eine ausschwenkbare Fahrzeugschiebetür bekannt, bei der der Türflügel gelenkig an einem in einer Führungsschiene geführten Winkelträger befestigt ist.

Nachteilig bei diesen Ausführungsformen ist, daß die maximal mögliche Eistiegsbreite in Offenstellung des Türflügels nicht verfügbar ist.

Der Erfindung liegt daher die Aufgabe zugrunde, eine ausschwenkbare Schiebetür für Fahrzeuge, insbesondere für Kraftfahrzeuge zu schaffen, bei der in der Offenstellung des Türflügels die gesamte Türöffnungsbreite für den Einstieg zur Verfügung steht.

Dies wird erfindungsgemäß dadurch erreicht, daß die bogenförmige Abkrümmung des Schwenkarmes mehr als 90 Grad, aber weniger als 180 Grad, zweckmäßig etwa 160 Grad beträgt.

Damit der Verschiebeweg der ausschwenkbaren Schiebetür noch etwas weiter vergrößert wird, ist das Ende der Schiene, das der Offenstellung des Türflügels entspricht, zum Wagenkasteninneren geringfügig abgewinkelt.

In der Zeichnung ist ein Ausführungsbeispiel dargestellt.

Figur 1   zeigt die ausschwenkbare Schiebetür in der geschlossenen Stellung bzw. in der Offenstellung ;

Figur 2   zeigt die oberen Führungsmittel des Türflügels ;

Figur 3   zeigt eine Seitenansicht ;

Figur 4   zeigt einen Schnitt gemäß der Linie IV-IV.

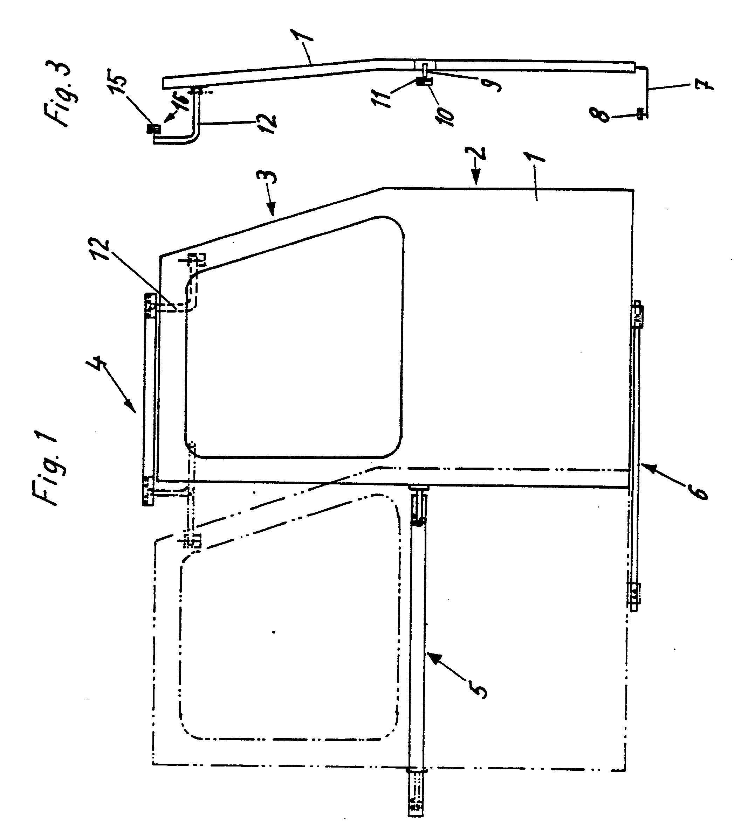

Wie Fig. 1 zeigt, wird der Türflügel 1, dessen unterer Teil verbreitert 2 ausgebildet ist, hingegen dessen oberer Teil nach hinten versetzt ausgebildet ist 3, oben von den Führungsmitteln 4, in der Mitte von den Führungsmitteln 5 und unten von den Führungsmitteln 6 geführt.

Die Führungsmittel in der Mitte und unten sind an sich bekannt ; sie bestehen unten beispielsweise aus einem starren Führungsarm 7, welcher in einer nach unten offenen U-Schiene 8 läuft. Die mittleren Führungsmittel 5 sind ebenfalls bekannt, sie bestehen aus einem Schwenkarm 9 mit am Ende angebrachtem Rollenwagen 10, der in einer entsprechenden Führungsschiene 11 läuft.

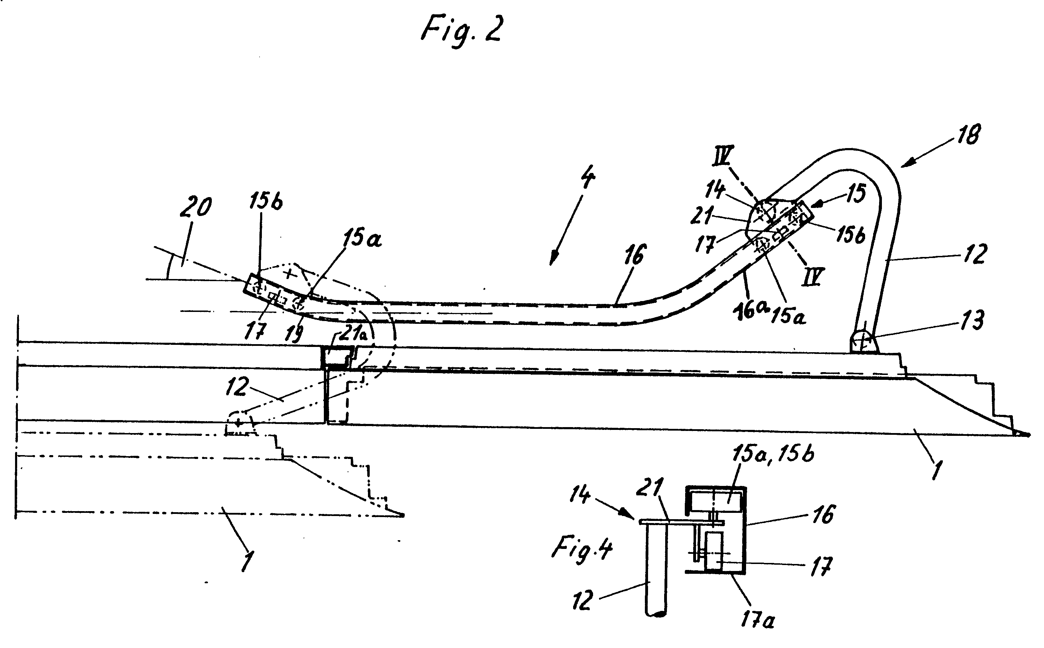

Wesentlich für die Türführung sind die oberen Führungsmittel 4. Diese sind in der Fig. 2 im einzelnen dargestellt. Dabei ist an dem Türflügel 1 ein Schwenkarm 12 bei 13 am Türflügel gelenkig angebracht. Das andere Ende des Schwenkarmes 12 trägt starr verbunden bei 14 einen Rollenwagen 15, der auf bzw. in einer Schiene 16 läuft. Es handelt sich dabei um eine nach unten offene U-Schiene 16, in der die Führungsrollen 15a und 15b laufen. Darüberhinaus besitzt der Rollenwagen noch die horizontalachsige Tragrolle 17, die auf einer entsprechenden ebenen Bahnschiene 17a läuft, die mit der nach unten offenen U-Schiene verbunden sein kann. Die Führungsrollen 15a, 15b und die Tragrolle 17 bilden den Rollenwagen 15, der mittels der Platte 21 starr mit dem Schwenkarm 12 verbunden ist (Fig. 4). Durch diese an sich bekannte Ausbildung des Rollenwagens ist der Rollenwagen und damit der Schwenkarm um den Auflagepunkt der Tragrolle 17 beweglich. Die Schiene 16 ist endseitig bei 16a nach innen abgekrümmt ; dadurch kann der Türflügel 1 in die Türöffnung einlaufen und liegt in der Schließstellung bündig mit der Wagenkastenwand.

Damit in der Offenstellung des Türflügels 1 die gesamte Türöffnungsbreite zur Verfügung steht, ist der Schwenkarm 2 bogenförmig 18 ausgebildet. Die bogenförmige Abkrümmung beträgt dabei mehr als 90° aber weniger als 180°, zweckmäßig etwa 160°.

Damit der Türflügel 1 in der Offenstellung noch einen etwas weiteren Verschiebeweg ausführen kann, ist das Endstück 19 der Schiene 16, also das Stück der Schiene 16, das der Offenstellung des Türflügels entspricht, geringfügig nach innen abgekrümmt. Diese Abkrümmung 20 kann etwa 10° betragen.

Wie Fig. 2 deutlich zeigt, wird durch die bogenförmige Abkrümmung des Schwenkarmes 12 der Türpfosten 21a umschlossen, mit der Folge, daß in geöffneter Stellung des Türflügels praktisch die gesamte Türöffnungsbreite zur Verfügung steht.

**Patentansprüche**

1. Ausschwenkbare Schiebetür für Fahrzeuge, insbesondere für Kraftfahrzeuge, bei der oben am Türflügel (1) Führungsmittel (4) vorgesehen sind, die in oberhalb des Türflügels angeordneten Führungsschienen (16) laufen, wobei das oben vorgesehene Führungsmittel ein am Türflügel gelenkig angebrachter Schwenkarm (12) ist, dessen Ende bogenförmig (18) abgekrümmt ist, dadurch gekennzeichnet, daß die bogenförmige Abkrümmung (18) mehr als 90 Grad aber weniger als 180 Grad, zweckmäßig etwa 160 Grad beträgt.

2. Ausschwenkbare Schiebetür nach Anspruch 1, dadurch gekennzeichnet, daß das Ende der Führungsschiene (16), das der Offenstellung des Türflügels (1) entspricht, zum Wagenkasteninneren geringfügig abgewinkelt (20) ist.

3. Ausschwenkbare Schiebetür nach Anspruch 1, dadurch gekennzeichnet, daß der Rollenwagen (15) mit Führungsrollen (15a, 15b) und einer Tragrolle (17) mit horizontaler Achse versehen ist, wobei der Auflagepunkt der Tragrolle zugleich der Drehpunkt des Rollenwagens ist.

## Claims

1. Pivotable sliding door for vehicles, in particular motor vehicles, in which guide means (4) are provided at the door leaf (1) at the top and run in guide rails (16) arranged above the door leaf, wherein the guide means provided at the top is a pivot arm (12), which is articulatedly mounted at the door leaf and the end of which is arcuately (18) bent, characterised thereby, that the arcuate bend (18) amounts to more than 90 degrees, but less than 180 degrees, expediently about 160 degrees.

2. Pivotable sliding door according to claim 1, characterised thereby, that that end of the guide rail (16), which corresponds to the open setting of the door leaf (1), is bent (20) slightly towards the interior of the vehicle body.

3. Pivotable sliding door according to claim 1, characterised thereby, that the roller carriage (15) is provided with guide rollers (15a, 15b) and a carrying roller (17) with horizontal axis, wherein the contact point of the carrying roller at the same time is the rotational centre of the roller carriage.

## Revendications

1. Porte coulissante avec déboîtement extérieur pour véhicules, en particulier pour véhicules automobiles, dans laquelle sont prévus en haut du battant (1) des moyens de guidage (4) qui circulent dans des rails de guidage (16) disposés en dessous du battant, le moyen de guidage prévu en haut étant un bras pivotant (12) articulé sur le battant et recourbé en arc (18) à son extrémité, caractérisée en ce que ladite partie recourbée en arc (18) s'étend sur plus de 90°, mais moins de 180°, et de préférence sur environ 160°.

2. Porte coulissante selon la revendication 1, caractérisée en ce que l'extrémité du rail de guidage (16) qui correspond à la position ouverte du battant (1) est légèrement coudée (20) vers l'intérieur de la carrosserie du véhicule.

3. Porte coulissante selon la revendication 1, caractérisée en ce que le chariot de roulement (15) est pourvu de galets de guidage (15a, 15b) et d'un galet de support (17) à axe horizontal, le point d'appui du galet étant en même temps le point de pivotement du chariot.

Fig.3

Fig.1

Fig.2

Fig.4

2